# EUROPEAN PATENT APPLICATION

(11) **EP 4 472 211 A1**
(43) Date of publication of application: **04.12.2024**
(21) Application number: 24178738.1
(22) Date of filing: 29.05.2024
(51) Int. Cl.: H04N 21/218, H04N 21/2187, H04N 21/2665, H04N 21/4223

(54) **PRESENTATION TRACK FOR EDITORIAL LIVE STREAMING**

(30) Priority: 30.05.2023 US 202363504929 P; 28.05.2024 US 202418676103
(71) Applicant: Apple Inc., Cupertino, CA 95014 (US)
(72) Inventor: SHERIDAN, Ryan M., Huntington Beach (US); MOSS, Alan M., Laguna Beach (US); YAEGER, Matthew J., Tustin (US); KING, Jared, Hermosa Beach (US)
(74) Representative: COPA Copenhagen Patents

(57) **Abstract**

During a live event, one or more cameras capture audiovisual data and provide the captured audiovisual data via one or more data feeds. The one or more data feeds are downscaled to a lower resolution and presented on a graphical user interface (GUI). One or more production selections are made related to the one or more data feeds via the GUI by a video editor to create a broadcast stream of the live event. A presentation track is created based on the one or more production selections made by the video editor. The presentation track is streamed to a user's device as a data feed and is used to re-create the broadcast stream of the live event. The user's device, based on the presentation track, obtains media streams from the one or more cameras at the captured resolution.

## Description

### Field of the Invention

This disclosure relates generally to live media streaming and more specifically to providing a presentation track for editorial live media streaming.

### Background

Live media consumption is a frequent use of electronic devices. Users can use many types of electronic devices to access and stream live media content for playback. Many of these electronic devices support high-definition media playback, such as Ultra HD or 4K, on a compatible display.

In current times, it can be preferable to stream live events in high resolution. As an example, a user may wish to stream a live event that not only has multiple camera views, but also stream the live event at a high resolution, such as Ultra HD or 4K.

### Brief Description of the Drawings

FIG. **1** shows, in block diagram form, a simplified network diagram according to one or more embodiments.
FIG. **2** shows, in flow chart form, an example method for presenting an event broadcast on a user's device according to one or more embodiments.
FIG. **3** shows, in flow chart form, an example method for generating a live media stream according to one or more embodiments.
FIG. **4** shows, in block diagram form, another simplified network diagram including a production server device according to one or more embodiments.
FIG. **5** shows, in flow chart form, an example process for a live media stream for an event including live media stream data and pre-recorded media segment and/or transition data according to one or more embodiments.
FIG. **6** shows an example system diagram for an electronic device in accordance with one or more embodiments.

### Detailed Description

This disclosure is directed to systems, methods, and computer readable media for providing a live media stream for an event that includes a presentation track, or feed, for editorial live streaming. In general, techniques are disclosed to provide the live media stream to a user's device that includes a stream that provides the presentation track. Additionally, the live media stream includes additional streams (e.g., live audio/video streams, audio/video data feeds, etc.) that are provided to the user's device based at least in part on the presentation track. Techniques are disclosed for providing the additional streams at a high resolution (e.g., 4K or Ultra high definition (Ultra HD)) from the event. The event may be, for example, a concert, a conference, or a sporting event. In some embodiments, the user's device may be a mobile computing device, a tablet computing device, a set-top box connected to a high-definition display screen, head-mounted device, or the like.

According to one or more embodiments, the disclosed technology addresses the need in the art to provide a presentation track in the form of metadata. In some embodiments, the presentation track may be streamed to a user's device as part of a live media stream for an event. Alternatively, the presentation track may be a data feed, also referred to herein as a presentation feed, that may be streamed to a user's device as part of a live media stream for an event.

In one embodiment, a streaming service device provides a video editor with a graphical user interface to create the presentation track during the event (e.g., on-the-fly). The event may be captured by a plurality of video cameras (e.g., 4K cameras) that each provide a stream of information as part of the live media stream. The presentation track, may include, for example, a series of commands and instructions as to how the event is to be displayed on the user's device. For example, for an event that is captured by multiple cameras, the presentation track may include directives as to when the user's device is to switch camera feeds or when to stop streaming information from a first camera and start streaming information from a second camera (e.g., at Time X, switch from camera Y to camera Z). The camera feeds may be provided at the original resolution (e.g., 4K video feed from a 4K camera). The presentation track may be packaged as a metadata file. In some embodiments, the metadata file may be static metadata, such that the metadata file is predefined based on pre-captured camera feeds. Additionally, or alternatively, the presentation track may be a dynamic metadata file that is continuously updated over time and streamed to the user's device. In some embodiments, the presentation track may be sent via a streaming protocol (e.g., HLS or Dash protocols). For example, the dynamic metadata file may be continuously updated for the duration of the event, such as a concert or sporting event that lasts for an extended period (e.g., 2-3 hours). In some embodiments, the presentation track may be streamed to the user's device for the duration of the event upon request from the user. Additionally, the presentation track may be streamed to the user's device on a band or channel that is different from the band or channel used to stream information captured by cameras. The presentation track may also specify the recall of previously stored or previously-streamed video and/or audio information.

According to one or more embodiments, the presentation track may include one or more production selections, such as actions, events, commands, or the like related to one or more streams of the live media stream. The user's device, via a display, may provide a graphical user interface or overlay that enables the user to interact with displayed media content during a presentation or event (e.g., scoreboard, closed captioning, etc.). In addition, according to one or more embodiments, the user interface may provide the user with one or more media controls to customize their viewing experience of the event. Media controls may include, but are not limited to, camera view, volume levels/mixing (e.g., crowd noise vs commentators), audio input selection (e.g., different commentators, language selection), event information, or the like.

According to one or more embodiments, the presentation track may also include instructions to provide one or more production effects during a live media stream. Production effects may include, for example, different types of actions, events, commands, or the like. Production effects may include different types of media elements for display during the live media stream, such as camera transitions (e.g., fade-to-black or fade-in/fade-out), video clips, or graphics when switching between camera feeds. Additionally, or alternatively, production effects may include, but are not limited to, the display of graphic overlays, images, animations, videos, interactive shapes, or a combination thereof. Production effects may, for example, be inserted into a live stream per directives of the presentation track, such as at a certain timestamp or in response to a pre-defined event (e.g., switch camera view). Production effects may be inserted into the live media stream during, for example, a scene transition between a first stream from a first camera source and a second stream from a second camera source, during a change in camera angle, a change in camera calibration, or similar on-the-fly applications.

According to one or more embodiments, the disclosed technology addresses the need in the art to provide a presentation track and production effects separately from live data streams to a user's device to produce a live media stream event. In one exemplary embodiment, production effects may be transmitted, or streamed, to the user's device with or on the same band as the presentation track. Production effects may include additional content, such as graphical or textual overlays, pre-recorded media segments, or the like. Additionally, or alternatively, production effects may include directives to be applied to received streams, such as visual treatments, transitions, or other editorial effects. In some embodiments, the production effects may be stored on a data store of or accessible by the user's device. By sending separately, production effects would not need to be hardcoded into the live media streams, for example the media streams obtained from different camera sources. Instead, the presentation track would provide instructions as to when a production effect is to be applied to the received media streams during the live media stream event (e.g., at time t=1, obtain stream from Camera A; at time t=2, provide fade-out/fade-in transition; at time t=3, obtain stream from Camera B). When a production effect is hardcoded into a media stream, the media stream may become difficult to compress due to high contrast and high frequency changes. By providing the production effect separately, the media stream may be provided as a smaller compressed media file.

According to one or more embodiments, the disclosed technology provides data streams, or data feeds, for a broadcast event. The data streams may be provided as an in-band signal, out-of-band signal, or combinations or variations thereof. For example, in some embodiments, a presentation track as described herein may be provided separately from live data streams (e.g., video of a live event broadcast). In this example, the presentation track may be provided as an independent data feed as out-of-band data while the live data streams may be provided as in-band data. In this example, the presentation track may be streamed to a device (e.g., a client device) on a dedicated channel and kept separate from live media streams.

In the following description, for purposes of explanation, numerous specific details are set forth to provide a thorough understanding of the disclosed concepts. As part of this description, some of this disclosure's drawings represent structures and devices in block diagram form in order to avoid obscuring the novel aspects of the disclosed embodiments. In this context, it should be understood that references to numbered drawing elements without associated identifiers (e.g., **100)** refer to all instances of the drawing element with identifiers (e.g., **100*a*** and **100*b*).** Further, as part of this description, some of this disclosure's drawings may be provided in the form of a flow diagram. The boxes in any particular flow chart may be presented in a particular order. However, it should be understood that the particular flow of any flow diagram is used only to exemplify one embodiment. In other embodiments, any of the various components depicted in the flow chart may be deleted, or the components may be performed in a different order, or even concurrently. In addition, other embodiments may include additional steps not depicted as part of the flow chart. The language used in this disclosure has been principally selected for readability and instructional purposes and may not have been selected to delineate or circumscribe the disclosed subject matter. Reference in this disclosure to "one embodiment" or to "an embodiment" means that a particular feature, structure, or characteristic described in connection with the embodiment is included in at least one embodiment, and multiple references to "one embodiment" or to "an embodiment" should not be understood as necessarily all referring to the same embodiment or to different embodiments.

It should be appreciated that in the development of any actual implementation (as in any development project), numerous decisions must be made to achieve the developers' specific goals (e.g., compliance with system and business-related constraints), and that these goals will vary from one implementation to another. It will also be appreciated that such development efforts might be complex and time consuming but would nevertheless be a routine undertaking for those of ordinary skill in the art of image capture having the benefit of this disclosure.

For purposes of this disclosure, media items are referred to as "videos." However, in one or more embodiments, the media items referred to as "videos" could be any kind of media item including, but not limited to, audio/video media items, radio stations, streaming data items, podcasts, music videos, animations, video graphics, graphic overlays, or the like. Additionally, for purposes of this disclosure, data feeds of user device instructions, or directives, are referred to as "presentation tracks" or "presentation feeds." However, in one or more embodiments, the data feeds referred to as "presentation tracks" or "presentation feeds" could be any kind of data feed used to direct presentation of a broadcast which includes, but is not limited to, commands that direct presentation of the broadcast, camera source data, timestamp data, transition data, graphics data, or combinations or variations thereof.

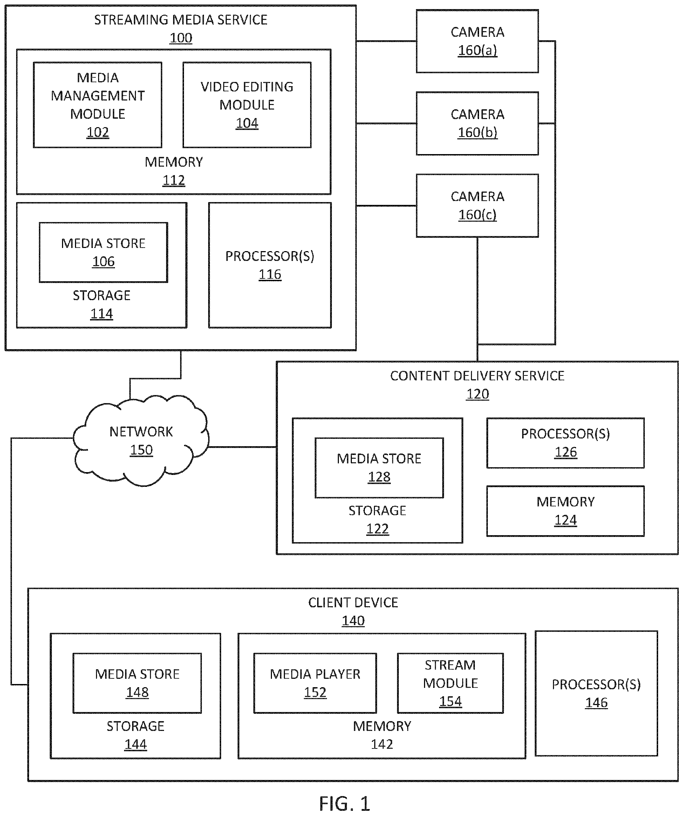

Referring to FIG. **1****,** a simplified block diagram is depicted of a streaming media service **100** connected to a content delivery service **120** and a user device **140,** for example over a network **150.** User device **140** may be a multifunctional device, such as a set-top box, digital media player, mobile phone, tablet computer, personal digital assistant, portable music/video player, wearable device, or any other electronic device that includes a media playback system that can cause video content to be displayed on a high-definition screen.

Streaming media service **100** may include one or more servers or other computing or storage devices on which the various modules and storage devices may be contained. Although streaming media service **100** is depicted as comprising various components in an exemplary manner, in one or more embodiments, the various components and functionality may be distributed across multiple network devices, such as servers, network storage, and the like. Further, additional components may be used, some combination of the functionality of any of the components may be combined. Generally, streaming media service **100** may include one or more memory devices **112,** one or more storage devices **114,** and one or more processors **116,** such as a central processing unit (CPU) or a graphical processing unit (GPU). Further, processor **116** may include multiple processors of the same or different type. Memory **112** may include one or more different types of memory, which may be used for performing device functions in conjunction with processor **116.** For example, memory **112** may include cache, ROM, and/or RAM. Memory **112** may store various programming modules during execution, including media management module **102,** and video editing module **104.**

Streaming media service **100** may store media files, media file data, music catalog data, video catalog data, media or video clips, statistical data, graphics data, or the like. Additional data may include, but is not limited to, presentation track data, dynamic metadata files, or the like. Streaming media service **100** may store this data in a media store **106** within storage **114.** Storage **114** may include one or more physical storage devices. The physical storage devices may be located within a single location, or may be distributed across multiple locations, such as multiple servers. Media files may be labeled or tagged for future reuse. Label data may be in the form of a unique identifier or code for quick identification and retrieval for presentation on a user's device. In one or more embodiments, the label data may include information regarding the media data, such as date, time, length, type of file, and/or media contents. Additionally, or alternatively, label data may include video clip information, event information, highlights data, or the like.

In some embodiments, streaming media service **100** may be communicatively coupled to a plurality of cameras **160(a), 160(b),** and **160(c).** Cameras **160(a), 160(b),** and **160(c)** may be connected directly to streaming media service **100,** such as over a local area network, over network **150,** or a combination or variation thereof. The illustration of three cameras is merely for example purposes, the set of cameras may include less or more than three cameras. Each of the cameras may be assigned unique identifiers, such as a serial number or an alphanumeric identification code. The cameras may have different capabilities, such as zoom capabilities, resolution capabilities, connectivity capabilities, or the like. Each camera may include audio and video capture capabilities. In some embodiments, for example, camera **160(a)** may be a fixed camera, camera **160(b)** may be a roving camera, such as one being carried around by a camera operator during an event, and camera **160(c)** may be attached to an unmanned aerial vehicle, like a drone.

Returning to the streaming media service **100,** the memory **112** includes modules that include computer readable code executable by processor **116** to cause the media service **100** to perform various tasks. As depicted, the memory **112** may include a media management module **102** and a video editing module **104.** According to one or more embodiments, the media management module **102** manages media content, such as media content captured by one or more camera devices (e.g., cameras **160(a)-160(c)).** Media management module **102** may provide media content upon request from a remote location, such as content delivery service **120** or user device **140.** Media management module **102** may store media content on media store **106** of storage **114** for subsequent retrieval. Portions of the media content may be stored on media store **106,** such as media clips, highlights, snippets, or the like. Additionally, or alternatively, media content may be stored on media store **148** of storage **144** of user device **140.**

Memory **112** also includes a video editing module **104.** In one or more embodiments, the video editing module **104** may cause display of a graphical user interface (GUI) to receive input from a user to edit video media content displayed by the GUI. The user may interact with the GUI of video editing module **104** via a variety of methods including, but not limited to, physical touch, touchless gestures, and/or retinal tracking. Video editing module **104** may receive audio and video data feeds from a plurality of sources, such as media store **106,** cameras **160(a)-160(c)** or a combination thereof. In some embodiments, the video data feeds may be received at a high resolution (e.g., 4K or Ultra HD). Additionally, or alternatively, the video data feeds may be downscaled to a lower resolution (e.g., 1080p) before being received by video editing module **104.** In some embodiments, video editing module **104** may downscale the received video data feeds to the lower resolution. In some embodiments, the received video data feeds may be displayed on a portion of the GUI for viewing and editing by a user. Alternatively, multiple video data feeds may be received and displayed on dedicated portions of the GUI for viewing. Video data feeds may be received in real-time, or near real-time, while an event is in progress, such as a sporting event. During the event, the user may create a presentation track that may include a series of commands and instructions as to how a media broadcast of the event is to be presented on a user's device. For example, one or more of the commands or instructions may indicate when to switch between video data feeds, when and where to display graphic overlays (e.g., statistics), when to present highlights or instant replays, or a combination thereof. The presentation track may be packaged as a metadata file. Additionally, or alternatively, the presentation track may be a dynamic metadata file that is continuously updated over time and streamed to the device of the user. For example, the dynamic metadata file may be continuously updated for the duration of a live event, such as a concert or sporting event that lasts for an extended period (e.g., 2-3 hours). As described herein, the presentation track may be streamed directly to the user's device, such as user device **140,** either from streaming media service **100** or via content delivery service **120.**

Content delivery service **120** may include one or more servers or other computing or storage devices on which the various modules and storage devices may be contained. Although content delivery service **120** is depicted as comprising various components in an exemplary manner, in one or more embodiments, the various components and functionality may be distributed across multiple network devices, such as servers, network storage, and the like. Further, additional components may be used, some combination of the functionality of any of the components may be combined. Generally, content delivery service **120** may include one or more memory devices **124,** one or more storage devices **122,** and one or more processors **126,** such as a central processing unit (CPU) or a graphical processing unit (GPU). Further, processor **126** may include multiple processors of the same or different type. Memory **124** may include one or more different types of memory, which may be used for performing device functions in conjunction with processor **126.** For example, memory **124** may include cache, ROM, and/or RAM. Memory **124** may store various programming modules during execution.

Content delivery service **120** may store media files, media file data, music catalog data, video catalog data, media or video clips, statistical data, graphics data, or the like. Additional data may include, but is not limited to, presentation track data, dynamic metadata files, or the like. Content delivery service **120** may store this data in a media store **128** within storage **122.** Storage **122** may include one or more physical storage devices. The physical storage devices may be located within a single location, or may be distributed across multiple locations, such as multiple servers. Media files may be labeled or tagged for future reuse. Label data may be in the form of a unique identifier or code for quick identification and retrieval for presentation on a user's device. In one or more embodiments, the label data may include information regarding the media data, such as date, time, length, type of file, and/or media contents. Additionally, or alternatively, label data may include video clip information, event information, highlights data, or the like.

In some embodiments, content delivery service **120** may be communicatively coupled to a plurality of cameras, such as cameras **160(a), 160(b),** and **160(c).** Cameras **160(a), 160(b),** and **160(c)** may be connected directly to content delivery service **120,** such as over a local area network or a wide area network, such as network **150,** or a combination or variation thereof. Additionally, content delivery service **120** may receive video feeds from one or more sources, such as cameras **160(a), 160(b),** and **160(c).** In one or more embodiments the video feeds may be in high resolution, such as Ultra HD or 4K. Data from the video feeds may be stored on a storage device, such as media store **128** within storage **122.** In some embodiments, video feeds may be provided to a user device, such as user device **140.** For example, one or more of the video feeds of a broadcast, or streaming event, may be provided in response to a request from the user device. The request may be made either directly by the user device or based on a presentation track. The presentation track, as described herein, may provide a series of commands that direct presentation of the broadcast, including camera source data along with timestamp data. Additionally, transition data may be provided, such as graphics to be displayed or a dimming feature when transitioning between one camera source and another camera source during the broadcast. The video data feeds may be provided in high resolution, such as 4K or Ultra HD.

User device **140** may include one or more memory devices **142,** one or more storage devices **144,** and one or more processors **146,** such as a central processing unit (CPU) or a graphical processing unit (GPU). Further, processor **146** may include multiple processors of the same or different type. Memory **142** may include one or more different types of memory, which may be used for performing device functions in conjunction with processor **146.** For example, memory **142** may include cache, ROM, and/or RAM. Memory **142** may store various programming modules that include computer readable code executable by processor **146** to cause the user device **140** to perform various tasks. As depicted, the memory **142** may include a media player **152** and a stream module **154.** According to one or more embodiments, media player **152** may provide media playback of content, such as video data content received from content delivery service **120,** cameras **160,** or streaming media service **100.**

In some embodiments, media player **152** may provide playback as directed by stream module **154.** Stream module **154** may receive a presentation track, as described herein, and perform various tasks to provide playback of a live stream media event broadcast.

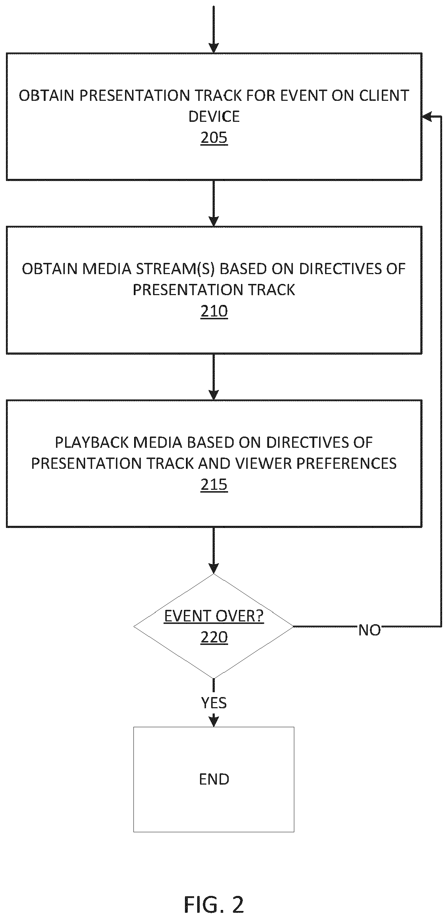

FIG. **2** shows, in flow chart form, an example method for generating a presentation track, as described herein. The method may be implemented, for example, by video editing module **104** on a server device, such as streaming media service **100** of FIG. **1****.** For purposes of explanation, the following steps will be described in the context of FIG. **1****.** However, the various actions may be taken by alternate components. In addition, the various actions may be performed in a different order. Further, some actions may be performed simultaneously, and some may not be required, or others may be added.

The flow chart begins at **205** where the streaming media service **100** may initiate an event broadcast. Initiating an event broadcast may include initializing network connections between devices needed for the event broadcast, such as cameras **160(a)-160(c),** streaming media service **100,** and content delivery service **120.** Event broadcast initialization may also include initializing modules, such as media management module **102** and video editing module **104** of streaming media service **100,** and stream module **154** of user device **140.** In some embodiments, initiating an event broadcast may include causing cameras **160(a)-160(c)** to capture audiovisual data, for example by one or more image sensors.

The flow chart continues at **210,** where the streaming media service **100** may pre-process video feeds received from cameras **160(a)-160(c).** For example, the streaming media service may pre-process by downscaling all video feeds of the event broadcast. Additionally, or alternatively, video feeds of the event broadcast may be reduced in size for real-time processing using, for example, a decimation filter, a video compressor, a video downsampler, or a combination thereof. Video feeds may be received from a plurality of sources, such as cameras **160(a)-160(c).** In some embodiments, the cameras may capture video data using high-definition camera lenses (e.g. 4K video feeds). The video feeds may then be downscaled to a lower resolution, such as 1080p, for further processing.

The flow chart continues at **215,** where video editing module **104** of streaming media service **100** may be used to create or update a presentation track. The presentation track, as described herein, may be used to provide directives of how the event broadcast is to be shown via a display. Video editing module **104** may process the downscaled video feeds and be used to generate a low-resolution version of the event broadcast, or otherwise create an edited version of the audiovisual content or live stream data. Downscaling of the video content feeds enables real-time editing of the feeds at reduced computational costs. For example, the presentation track may be created based on the downscaled data feeds thereby requiring less bandwidth and other computational resources required by high quality streams (e.g., 4K video streams). Playback is then provided to a user's device (e.g., user device **140)** of the original video feeds (e.g., 4K video streams) based on directives the presentation track. That is, the presentation track may encode presentation directions for the video feeds. In some embodiments, a user may be provided with a graphical user interface (GUI) to interact with one or more features of video editing module **104.** Interactive features of the GUI may include, but is not limited to, camera source selection, graphics overlay selection (e.g., statistics, sports scores, fun facts), video transition options, audio feed selection (e.g., language, commentators, crowd noise), environmental dimming, pre-recorded video clip insertions (e.g., highlights, replays), or the like. In some embodiments, graphic overlays are transmitted separately to a client's device for display at certain times (e.g., timed metadata) during the broadcast, as opposed to being "burned-in" to the video feed. Inserted clips may be retrieved from a plurality of different locations, such as media store **106,** media store **128,** or media store **148.** In some embodiments, the presentation track may be streamed directly from streaming media service **100** to **140** and updated dynamically over time (e.g., during the event broadcast).

In some embodiments, in **220,** multiple streams may be provided to the user device **140.** For example, a user may have the option to only view the low-resolution version of the event. In this case, only the downscaled version of the event would be streamed to the user device **140,** either directly from streaming media service **100** or via content delivery service **120.** Alternatively, a user may opt to receive a high-resolution version of the event broadcast. In this case, the presentation track of the event would be streamed to the user device **140,** either directly from streaming media service **100** or via content delivery service **120.** User device **140** would then obtain media streams based on the presentation track, as described in FIG. **2****.** In **225,** when the event broadcast is over, the process ends. In **225,** when the event broadcast is still occurring, the process continues with **215** to resume creation of the presentation track and streaming of the event based on directives of the presentation track.

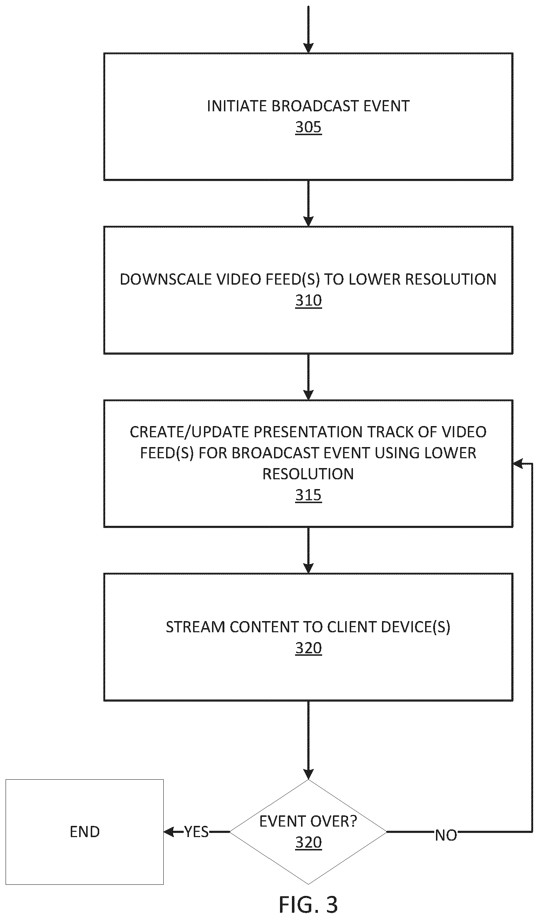

FIG. **3** shows, in flow chart form, an example method for playback of a streaming event. The method may be implemented by one or more modules on a user device, such as media player **152** or stream module **154** on user device **140** of FIG. **1****.** For purposes of explanation, the following steps will be described in the context of FIG. **1****.** However, the various actions may be taken by alternate components. In addition, the various actions may be performed in a different order. Further, some actions may be performed simultaneously, and some may not be required, or others may be added.

The flow chart begins at **305** where the user device **140** obtains a presentation track from an external source or location, such as streaming media service **100.** According to one or more embodiments, the presentation track may be obtained from a streaming media service **100,** as shown in FIG. **1****.** The presentation track may be updated dynamically and on a continual basis. For example, the presentation track may be updated for the duration of an event broadcast. The presentation track may include one or more directives, instructions, or commands for how the event broadcast is to be presented on the user device **140.** For example, one or more directives may include frame-by-frame instructions, such as timing data for video transitions (dim/fade), graphic overlays (e.g., statistics, informational data), video animations, or combinations thereof. Additionally, or alternatively, commands may be provided to instruct which video feed, or feeds, should be presented on a display of the user device **140** via media player **152.**

The flow chart continues at **310** where a media stream, or media streams (e.g., video feed(s)) may be obtained by the stream module **154** based on the directives of the presentation track. In some embodiments, multiple video feeds may be provided on the display, such as via split screen interface. Video feeds may be provided directly from the source, such as from one or more cameras **160(a)-160(c).** Alternatively, video feeds may be provided from an intermediary server, such as content delivery service **120.** Even further, one video feed may be provided from the source, such as camera **160(a),** and another video feed may be provided from an intermediary server, such as content delivery service **120.** Directives of the presentation track may indicate not only where to obtain a video feed, or video feeds, but may also indicate, via timing metadata, when to switch video feeds. Video feeds may be provided directly to the user device **140** in high resolution (e.g., 4K or Ultra HD).

The flow chart continues at **315** where media playback of the event broadcast is provided, such as via user device **140.** Playback of the event broadcast may be provided in view of the presentation track, as described herein. Additionally, or alternatively, the user of the event broadcast may provide directives of their own to tailor the event broadcast. In one example, the user may be provided with the option to switch or toggle between one or more of the video feeds to change camera views of the event broadcast. In some embodiments, the user may be provided with an interactive GUI to choose features (e.g., graphic overlays), switch camera feeds, or even switch audio feeds (e.g., switch between commentators of an event broadcast, switch between languages). Continuing at **320,** once an event is over, such as when the broadcast event is completed, the process ends. Otherwise, the process continues back to **305** to continue receiving the presentation track. As described herein, the presentation track may be continuously updated. Further, the presentation track may be continuously streamed to user device **140** for processing by stream module **154.**

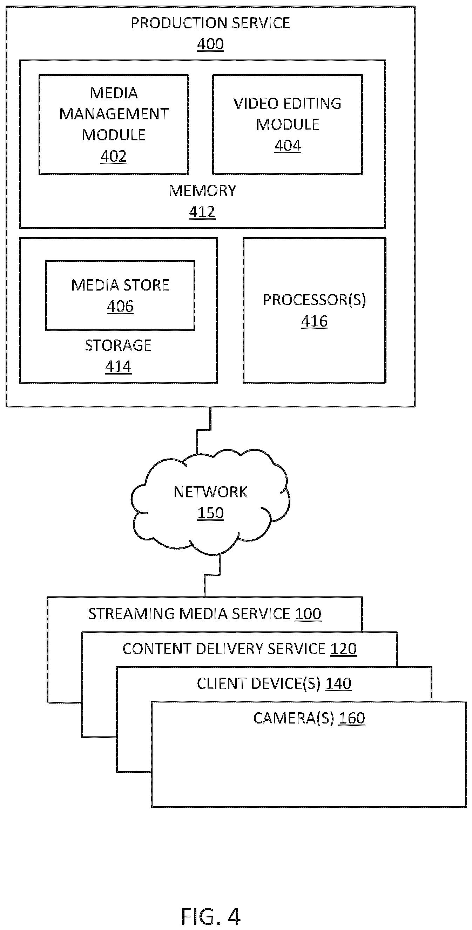

Referring now to FIG. **4****,** a simplified functional block diagram is depicted of a production service **400** connected to streaming media service **100,** content delivery service **120** and user device **140,** for example over a network **150.** Streaming media service **100** may include one or more servers or other computing or storage devices on which the various modules and storage devices may be contained. Although production service **400** is depicted as comprising various components in an exemplary manner, in one or more embodiments, the various components and functionality may be distributed across multiple network devices, such as servers, network storage, and the like. Further, additional components may be used, some combination of the functionality of any of the components may be combined. Generally, production service **400** may include one or more memory devices **412,** one or more storage devices **414,** and one or more processors **416,** such as a central processing unit (CPU) or a graphical processing unit (GPU). Further, processor **416** may include multiple processors of the same or different type. Memory **412** may include one or more different types of memory, which may be used for performing device functions in conjunction with processor **416.** For example, memory **412** may include cache, ROM, and/or RAM. Memory **412** may store various programming modules during execution, including media management module **402,** and video editing module **404.**

Production service **400** may store media files, media file data, music catalog data, video catalog data, media or video clips, statistical data, graphics data, or the like. Additional data may include, but is not limited to, presentation track data, dynamic metadata files, or the like. Production service **400** may store this data in a media store **406** within storage **414.** Storage **414** may include one or more physical storage devices. The physical storage devices may be located within a single location, or may be distributed across multiple locations, such as multiple servers. Media files may be labeled or tagged for future reuse. Label data may be in the form of a unique identifier or code for quick identification and retrieval for presentation on a user's device. In one or more embodiments, the label data may include information regarding the media data, such as date, time, length, type of file, and/or media contents. Additionally, or alternatively, label data may include video clip information, event information, highlights data, or the like.

In some embodiments, production service **400** may be communicatively coupled to a plurality of cameras **160,** such as cameras **160(a), 160(b),** and **160(c)** of FIG. **1****.** Cameras **160** may be connected directly to production service **400,** such as over a local area network, over network **150,** or a combination or variation thereof.

Returning to the production service **400,** the memory **412** includes modules that include computer readable code executable by processor **416** to cause the production service **400** to perform various tasks. As depicted, the memory **412** may include a media management module **402** and a video editing module **404.** According to one or more embodiments, the media management module **402** manages media content, such as media content captured by one or more camera devices (e.g., cameras **160(a)-160(c)).** Media management module **402** may provide media content upon request from a remote location, such as content delivery service **120** or user device **140.** Media management module **402** may store media content on media store **406** of storage **414** for subsequent retrieval. Portions of the media content may be stored on media store **406,** such as media clips, highlights, snippets, graphics, animations, scene transitions, video effects, or the like.

Memory **412** also includes a video editing module **404,** similar in functionality as video editing module described above with respect to video editing module **104** of FIG. **1****,** for creating a presentation track. In one or more embodiments, production service **400** may transmit the presentation track via an out-of-band signal. Various data stream schemes may be implemented by the disclosed technology. For example, one or more main data streams for a broadcast event may be provided as in-band data, while the presentation track, or presentation feed, may be provided as an independent stream as out-of-band data. For purposes of this disclosure, in-band data is defined as data that is transmitted, or streamed, on a dedicated, or main channel. Additionally, out-of-band data is defined as data that is transmitted, or streamed, on a channel that is independent from the main channel. For example, out-of-band data is data that is transmitted, or streamed, independent from the channel used by in-band data. The one or more main data streams may be transmitted, for example, from camera(s) **160(a)-160(c)** to one or more endpoints, such as streaming media service **100,** content delivery service **120,** or user device **140.** The one or more main data streams, as described herein, may be high resolution (e.g., 4K or Ultra HD) data streams. The one or more main data streams may be made available, for example, directly from one or more of the plurality of cameras, via the streaming media service **100,** via the content delivery service **120,** or combinations or variations thereof. Continuing with the example, the user device **140** may receive the out-of-band data stream, which includes the presentation track. The user device **140** may then obtain data streams of the in-band stream considering the commands, directives, or instructions of the presentation track. The event broadcast is then re-created for display on a display device of the user device **140.**

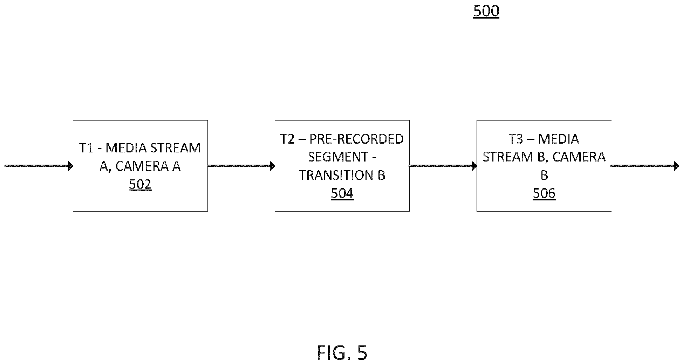

Referring now to FIG. **5****,** an exemplary flow diagram **500** is provided illustrating an embodiment of the disclosed that includes the insertion of a production effect into a live media stream. Production effects may be provided with a presentation track, as described herein, stored on a local memory of a user's device, or retrieved from an external storage. Production effects may include, for example, different types of camera transitions, such as fade-to-black or fade-in/fade-out. Additionally, or alternatively, production effects may include the display of graphic overlays, images, animations, videos, or a combination thereof. The production effects are generated and rendered on the user's device based on directives of the presentation track, commands embedded within a media stream, or the like. In one example, a first media stream may be displayed **502** at time T1, a production effect may be displayed or applied **504** at time T2, and a second media stream may be displayed **506** at time T3. Different variations may be implemented, such as providing a series of production effects between media streams obtained from different cameras during a live media stream, such as a screen transition, the display of graphics, or the like. In one non-limiting example, the production effect may be inserted into a live stream per directives of the presentation track, such as at a certain timestamp or in response to a pre-defined event (e.g., switch camera view or source). Production effects may be inserted into the live media stream during a scene transition between a first media stream and a second media stream, during a change in camera angle, a change in camera calibration, or similar on-the-fly scenarios during a live event broadcast. In some embodiments, commands may be embedded into the media stream, causing the playback device to render transitions on the fly, as opposed to reading image content from the media stream. Additionally, at the start of media playback, graphics and/or camera calibration mesh assets may be provided to assist the playback device in rendering scene transitions and/or camera changes.

In some embodiments, the presentation track and production effects may be transmitted separately from live media streams obtained from, for example, cameras used to capture a live event. In one exemplary embodiment, production effects may be transmitted, or streamed, to a user's device with or on the same band as the presentation track. By sending separately, a production effect (e.g., a fade-to-black transition) would not need to be hardcoded into the live media stream that is being streamed from the camera to the user's device. When a production effect is hardcoded into a media stream, the media stream becomes difficult to compress due to high contrast and high frequency changes. By providing the production effects separately, media streams may be provided as smaller compressed media files. For example, image or video transitions may be rendered by the user's device based on directives set forth by the presentation track during the live media event broadcast (e.g., apply fade-to-black transition at time X or when switching from Camera source A to Camera source B).

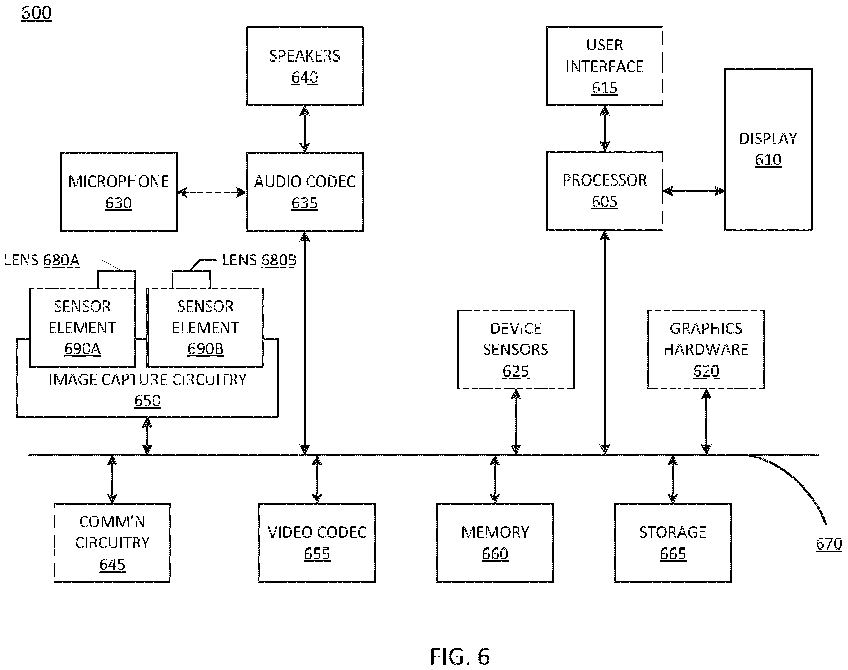

Referring now to FIG. **6****,** a simplified functional block diagram of illustrative multifunction device **600** is shown according to one embodiment. Multifunctional device **600** may show representative components, for example, for devices of streaming media service **100,** content delivery service **120,** and user device **140** of FIG. **1****.** Multifunction electronic device **600** may include processor **605,** display **610,** user interface **615,** graphics hardware **620,** device sensors **625** (*e*.*g*., proximity sensor/ambient light sensor, accelerometer and/or gyroscope), microphone **630,** audio codec(s) **635,** speaker(s) **640,** communications circuitry **645,** digital image capture circuitry **650** (*e*.*g*., including camera system) video codec(s) **655** (e.g., in support of digital image capture unit), memory **660,** storage device **665,** and communications bus **670.** Multifunction electronic device **600** may be, for example, a digital camera or a personal electronic device such as a personal digital assistant (PDA), personal music player, mobile telephone, or a tablet computer.

Processor **605** may execute instructions necessary to carry out or control the operation of many functions performed by device **600** (*e*.*g*., such as the generation and/or processing of images or video as disclosed herein). Processor **605** may, for instance, drive display **610** and receive user input from user interface **615.** User interface **615** may allow a user to interact with device **600.** For example, user interface **615** can take a variety of forms, such as a button, keypad, dial, a click wheel, keyboard, display screen and/or a touch screen. Processor **605** may also, for example, be a system-on-chip such as those found in mobile devices and include a dedicated graphics processing unit (GPU). Processor **605** may be based on reduced instruction-set computer (RISC) or complex instruction-set computer (CISC) architectures or any other suitable architecture and may include one or more processing cores. Graphics hardware **620** may be special purpose computational hardware for processing graphics and/or assisting processor **605** to process graphics information. In one embodiment, graphics hardware **620** may include a programmable GPU.

Image capture circuitry **650** may include two (or more) lens assemblies **680A** and **680B,** where each lens assembly may have a separate focal length. For example, lens assembly **680A** may have a short focal length relative to the focal length of lens assembly **680B.** Each lens assembly may have a separate associated sensor element **690A** and **690B.** Alternatively, two or more lens assemblies may share a common sensor element. Image capture circuitry **650** may capture still and/or video images. Output from image capture circuitry **650** may be processed, at least in part, by video codec(s) **655** and/or processor **605** and/or graphics hardware **620,** and/or a dedicated image processing unit or pipeline incorporated within circuitry **650.** Images so captured may be stored in memory **660** and/or storage **665.**

Sensor and camera circuitry **650** may capture still and video images that may be processed in accordance with this disclosure, at least in part, by video codec(s) **655** and/or processor **605** and/or graphics hardware **620,** and/or a dedicated image processing unit incorporated within circuitry **650.** Images so captured may be stored in memory **660** and/or storage **665.** Memory **660** may include one or more different types of media used by processor **605** and graphics hardware **620** to perform device functions. For example, memory **660** may include memory cache, read-only memory (ROM), and/or random access memory (RAM). Storage **665** may store media (*e*.*g*., audio, image and video files), computer program instructions or software, preference information, device profile information, and any other suitable data. Storage **665** may include one more non-transitory computer-readable storage mediums including but not limited to magnetic disks (fixed, floppy, and removable) and tape, optical media such as CD-ROMs and digital video disks (DVDs), and semiconductor memory devices such as Electrically Programmable Read-Only Memory (EPROM), Electrically Erasable Programmable Read-Only Memory (EEPROM), or the like. Memory **660** and storage **665** may be used to tangibly retain computer program instructions or code organized into one or more modules and written in any desired computer programming language. When executed by, for example, processor **605** such computer program code may implement one or more of the methods described herein.

The scope of the disclosed subject matter should be determined with reference to the appended claims, along with the full scope of equivalents to which such claims are entitled. In the appended claims, the terms "including" and "in which" are used as the plain-English equivalents of the respective terms "comprising" and "wherein."

Exemplary embodiments of the present disclosure are set out in the following items:

### Items

1. A method for broadcasting an event, the method, with at least one computing device, comprising:
   receiving one or more data feeds that includes audiovisual information of the event captured by one or more image sensors;
   presenting, on a graphical user interface (GUI) of the at least one computing device, representations of each of the one or more data feeds of the event;
   receiving one or more selections related to the one or more data feeds from a user of the at least one computing device;
   generating a presentation feed based on the received one or more selections; and
   transmitting the one or more data feeds and the presentation feed to one or more receivers.
2. The method of item 1, wherein the one or more data feeds are received in a first resolution, the method further comprising:
   downscaling the one or more data feeds to a second resolution.
3. The method of any of items 1-2, wherein the presentation feed includes one or more directives for displaying the event on a display device.
4. The method of any of items 1-3, wherein the presentation feed includes one or more directives to obtain at least one of the one or more data feeds, wherein each of the one or more directives includes a timestamp to process the directive.
5. The method of any of items 1-4, wherein the one or more image sensors are comprised in one or more camera devices.
6. The method of any of items 1-5, wherein the one or more data feeds comprise video content in Ultra High Definition or 4K resolution.
7. The method of any of items 1-6, wherein the presentation feed includes static metadata.
8. The method of any of items 1-7, wherein the presentation feed includes dynamic metadata.
9. The method of any of items 1-8, wherein the one or more data feeds are transmitted using an in-band signal.
10. The method of any of items 1-9, wherein the presentation feed is transmitted using an out-of-band signal.
11. The method of any of items 1-10, further comprising:
   receiving, during the event, subsequent selections from the user of the computing device; and
   dynamically updating the presentation feed based on the subsequent selections.
12. The method of item 11, wherein the presentation feed is dynamically updated in real-time.
13. The method of any of items 11-12, wherein the subsequent selections include one or more of:
   modifying presentation of audiovisual information of the one or more data feeds,
   switching between a first and a second image sensor of the one or more image sensors,
   selecting one or more graphic overlays to be presented over the one or more data feeds,
   selecting more than one of the one or more data feeds to be presented simultaneously, and
   selecting at least one saved media item for display during the event.
14. The method of any of items 1-13, wherein the one or more selections include selection of a first image sensor of the one or more image sensors.
15. A method, comprising,
   capturing live stream data from a plurality of sources at a first resolution;
   downscaling the live stream data from the plurality of sources to a second resolution;
   creating an edited version of the live stream data from the plurality of sources at the second resolution;
   generating a presentation feed based on the edited version of the live stream data; and
   transmitting the edited version at the second resolution, the presentation feed of the edited version at the second resolution, and the live stream data from the plurality of sources at the first resolution.
16. The method of item 15, wherein the presentation feed is transmitted via an out-of-band signal independent of the live stream data.
17. The method of any of items 15-16, wherein the presentation feed includes at least one of static metadata and dynamic metadata.
18. A content capture system, comprising:
   capture video data from a plurality of image sensors in a first resolution;
   downscale the captured video data to a second resolution;
   generate, based on the downscaled captured video data, a presentation feed comprising metadata associated with presentation directions for the captured video data in the first resolution; and
   transmit the presentation feed to one or more receivers.
19. The system of item 18, wherein the first resolution is Ultra HD or 4K.
20. The system of any of items 18-19, wherein the presentation feed includes dynamic metadata.
21. The system of any of items 18-20, wherein the presentation feed includes static metadata.
22. The system of any of items 18-21, wherein the presentation feed is generated based on one or more selections related to one or more of the plurality of image sensors from a user of the content capture system.
23. The system of any of items 18-22, wherein the presentation feed is generated based on one or more selections related to one or more production selections related to the captured video data.
24. The system of item 23, wherein the one or more production selections comprises one or more of scene transitions, pre-recorded video clips, animations, or a combination thereof.
25. A playback device, comprising:
   a display;
   a processor; and
   a non-transitory computer-readable media having instructions stored thereon, wherein the instructions, when executed by the processor, cause the playback device to perform a method comprising:
      receiving a stream of information comprising a presentation feed for an event;
      obtaining one or more live media streams based on one or more directives of the presentation feed;
      displaying the one or more live media streams on the display based on the one or more directives of the presentation feed.
26. The playback device of item 25, wherein each of the one or more live media streams represent a different camera view of the event.
27. The playback device of any of items 25-26, wherein the presentation feed comprises dynamic metadata.
28. The playback device of any of items 25-27, wherein the stream of information includes one or more production selections related to the one or more live media streams.
29. The playback device of item 28, wherein the one or more production selections are rendered by the playback device.
30. The playback device of any of items 25-29, wherein the one or more live media streams are obtained from one or more camera devices.
31. The playback device of any of items 25-30, wherein the one or more live media streams are provided in 4K or Ultra HD.

## Claims

1. A method for broadcasting an event, the method, with at least one computing device, comprising:
receiving one or more data feeds that includes audiovisual information of the event captured by one or more image sensors;
presenting, on a graphical user interface (GUI) of the at least one computing device, representations of each of the one or more data feeds of the event;
receiving one or more selections related to the one or more data feeds from a user of the at least one computing device;
generating a presentation feed based on the received one or more selections; and
transmitting the one or more data feeds and the presentation feed to one or more receivers.

2. The method of claim 1, wherein the one or more data feeds are received in a first resolution, the method further comprising:
downscaling the one or more data feeds to a second resolution.

3. The method of any of claims 1-2, wherein the presentation feed includes one or more directives for displaying the event on a display device.

4. The method of any of claims 1-3,
wherein the presentation feed includes one or more directives to obtain at least one of the one or more data feeds, wherein each of the one or more directives includes a timestamp to process the directive, and/or
wherein the one or more image sensors are comprised in one or more camera devices, and/or
wherein the one or more data feeds comprise video content in Ultra High Definition or 4K resolution, and/or
wherein the presentation feed includes static metadata, and/or
wherein the presentation feed includes dynamic metadata, and/or
wherein the one or more data feeds are transmitted using an in-band signal, and/or
wherein the presentation feed is transmitted using an out-of-band signal.

5. The method of any of claims 1-4, further comprising:
receiving, during the event, subsequent selections from the user of the computing device; and
dynamically updating the presentation feed based on the subsequent selections.

6. The method of claim 5, wherein the presentation feed is dynamically updated in real-time.

7. The method of any of claims 5-6, wherein the subsequent selections include one or more of:
modifying presentation of audiovisual information of the one or more data feeds,
switching between a first and a second image sensor of the one or more image sensors,
selecting one or more graphic overlays to be presented over the one or more data feeds,
selecting more than one of the one or more data feeds to be presented simultaneously, and
selecting at least one saved media item for display during the event.

8. The method of any of claims 1-7, wherein the one or more selections include selection of a first image sensor of the one or more image sensors.

9. A method, comprising,
capturing live stream data from a plurality of sources at a first resolution;
downscaling the live stream data from the plurality of sources to a second resolution;
creating an edited version of the live stream data from the plurality of sources at the second resolution;
generating a presentation feed based on the edited version of the live stream data; and
transmitting the edited version at the second resolution, the presentation feed of the edited version at the second resolution, and the live stream data from the plurality of sources at the first resolution.

10. The method of claim 9, wherein the presentation feed is transmitted via an out-of-band signal independent of the live stream data.

11. The method of any of claims 9-10, wherein the presentation feed includes at least one of static metadata and dynamic metadata.

12. A content capture system, comprising:
capture video data from a plurality of image sensors in a first resolution;
downscale the captured video data to a second resolution;
generate, based on the downscaled captured video data, a presentation feed comprising metadata associated with presentation directions for the captured video data in the first resolution; and
transmit the presentation feed to one or more receivers.

13. The system of claim 12,
wherein the first resolution is Ultra HD or 4K, and/or
wherein the presentation feed includes dynamic metadata, and/or
wherein the presentation feed includes static metadata, and/or
wherein the presentation feed is generated based on one or more selections related to one or more of the plurality of image sensors from a user of the content capture system, and/or
wherein the presentation feed is generated based on one or more selections related to one or more production selections related to the captured video data, and/or
wherein the one or more production selections comprises one or more of scene transitions, pre-recorded video clips, animations, or a combination thereof.

14. A playback device, comprising:
a display;
a processor; and
a non-transitory computer-readable media having instructions stored thereon, wherein the instructions, when executed by the processor, cause the playback device to perform a method comprising:
receiving a stream of information comprising a presentation feed for an event;
obtaining one or more live media streams based on one or more directives of the presentation feed; and
displaying the one or more live media streams on the display based on the one or more directives of the presentation feed.

15. The playback device of claim 14,
wherein each of the one or more live media streams represent a different camera view of the event, and/or
wherein the presentation feed comprises dynamic metadata, and/or
wherein the stream of information includes one or more production selections related to the one or more live media streams, and/or
wherein the one or more production selections are rendered by the playback device, and/or
wherein the one or more live media streams are obtained from one or more camera devices, and/or
wherein the one or more live media streams are provided in 4K or Ultra HD.
